(19) Europäisches Patentamt
European Patent Office
Office européen des brevets

(11) **EP 4 502 890 A1**

(12) **EUROPEAN PATENT APPLICATION**
published in accordance with Art. 153(4) EPC

(43) Date of publication:
**05.02.2025 Bulletin 2025/06**

(21) Application number: **22939370.7**

(22) Date of filing: **29.04.2022**

(51) International Patent Classification (IPC):
**G06Q 10/06** (2023.01)     **G06F 16/9535** (2019.01)

(52) Cooperative Patent Classification (CPC):
**G06F 16/9535; G06Q 10/06**

(86) International application number:
**PCT/CN2022/090642**

(87) International publication number:
**WO 2023/206523 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **ZOU, Wenchao
Shanghai 200120 (CN)**
• **WANG, Haifeng
Shanghai 201105 (CN)**

(74) Representative: **Isarpatent
Patent- und Rechtsanwälte
Barth Hassa Peckmann & Partner mbB
Friedrichstraße 31
80801 München (DE)**

(54) **WORKFLOW RECOMMENDATION METHOD AND DEVICE, AND STORAGE MEDIUM**

(57)     A workflow recommendation method and device, and a computer-readable storage medium. The method comprises: receiving a current requesting entity; on the basis of a pre-established deterministic mapping relationship between each requesting entity and each workflow entity, searching the deterministic mapping relationships by using the current requesting entity as a keyword, so as to obtain at least one candidate workflow entity which establishes a deterministic mapping relationship with the current requesting entity; in the deterministic mapping relationship, the requesting entity and the corresponding workflow entity establish a connection by means of a mapping relationship between "using" and "used"; and recommending the candidate workflow entity. The method can realize accurate workflow recommendation.

Fig. 1

EP 4 502 890 A1

**Description**

Technical field

The present application relates to the field of computers, in particular to a workflow recommendation method and device, and to a computer-readable storage medium.

Background of the invention

As computers have developed, requirements engineering has also developed broadly. Requirements engineering is a discipline in which technology and methods that have been proven to be effective are applied to perform requirement analysis, determine customer requirements, help analysis personnel to understand problems and define all external features of a target system. Requirements engineering uses suitable tools and marks to systematically describe a system to be developed as well as its behavioral features and associated constraints, forming a requirement file, and supporting the evolution of users' ever-changing requirements.

One of the objectives of requirements engineering is to generate a workflow by providing requirements such as functional requirements and descriptions of use cases. A key point in achieving this objective is to map a requirement entity (e.g. a task/use case) to a workflow entity (e.g. a component/skill/feature). A typical method is keyword mapping, in which a requirement entity and a workflow entity are marked with the same label (i.e. keyword), so as to create a mapping relationship therebetween.

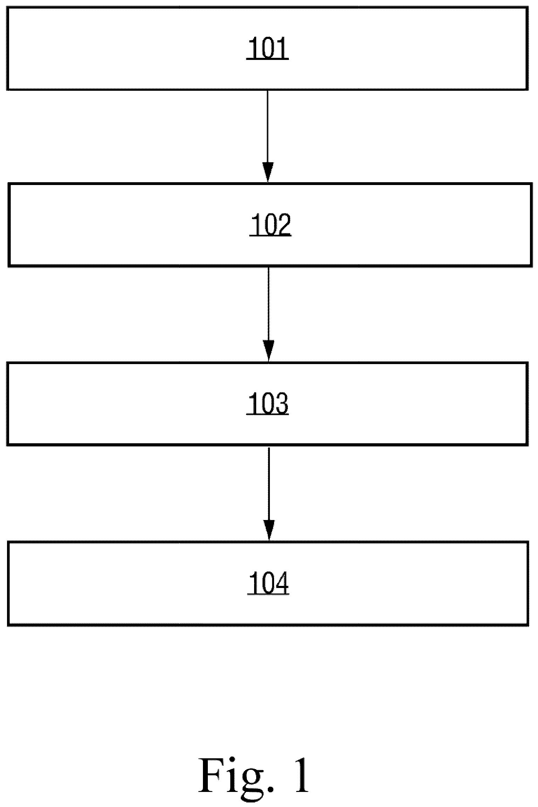

For example, Fig. 1 shows a demonstration of keyword mapping in one example. As shown in Fig. 1, the requirement entity "performance improvement" is marked "performance monitoring" and "availability monitoring", and the skill entity "performance analysis" is marked "performance monitoring" and "OEE monitoring". Here, the label "performance monitoring" can match the requirement and the skill, but no match is possible with the labels "availability monitoring" and "OEE monitoring". However, it is common knowledge that OEE (overall equipment effectiveness) may represent availability, so the two are in fact synonyms.

The requirement entity and the workflow entity are generally provided by different user groups, and different user groups might set different labels for the same meaning or set the same label for different meanings; therefore, natural language keywords such as synonyms and polysemous words will reduce the feasibility of keyword mapping. In addition, each entity might have a different granularity, and entity categories might partially overlap or be different from one another; for example, different tasks might have the same skill, and the same task might have different skills; different use cases might have the same edge application, and the same use case might have different edge applications. This makes it difficult to use a group of unified labels to mark entities correctly.

Thus, those skilled in the art are still concentrating efforts on seeking other workflow recommendation solutions.

Summary of the invention

In view of the above, embodiments of the present application provide not only a workflow recommendation method, but also a workflow recommendation device and a computer-readable storage medium, which are capable of realizing workflow recommendation in requirements engineering and making workflow recommendation more flexible and efficient.

To solve the abovementioned technical problem, the technical solution of the present application is realized as follows:

A workflow recommendation method, comprising: receiving a current requirement entity; based on a pre-established determinate mapping between each requirement entity and each workflow entity, using the current requirement entity as a keyword to search the determinate mappings, in order to obtain at least one candidate workflow entity, where a determinate mapping has been established between this at least one candidate workflow entity and the current requirement entity, wherein, in the determinate mapping, a connection is established between the requirement entity and the corresponding workflow entity by a "using" and "used" mapping; and recommending the candidate workflow entity.

A workflow recommendation device, comprising: a human-machine interaction module and a workflow entity search module, wherein: the human-machine interaction module is used to receive a current requirement entity and to provide the current requirement entity to the workflow entity search module and to recommend a candidate workflow entity from the workflow search module; the workflow entity search module is used, based on a pre-established determinate mapping between each requirement entity and each workflow entity, to search the determinate mappings using the current requirement entity as a keyword, in order to obtain at least one candidate workflow entity, where a determinate mapping has been established between this at least one candidate workflow entity and the current requirement entity, and to provide the at least one candidate workflow entity to the human-machine interaction module; in the determinate mapping, a connection is established between the requirement entity and the corresponding workflow entity by a "using" and "used" mapping.

A workflow recommendation device, comprising at least one memory and at least one processor, wherein: the at least one memory is used to store a computer program; the at least one processor is used to retrieve the computer program stored in the at least one memory and to perform the workflow recommendation method described in any one of the embodiments above.

A computer-readable storage medium, having a computer program stored thereon; the computer program is executable by a processor and performs the workflow recommendation method described in any one of the embodiments above.

It can be seen from the technical solution above that in the present application, due to the fact that a determinate mapping is established between a requirement entity and a workflow entity, a determinate and accurate workflow entity can be recommended for the current requirement entity, and the efficiency and effectiveness of workflow recommendation is improved.

In addition, due to the fact that any number of determinate mappings between requirement entities and workflow entities can be realized, and expansion with new mappings is possible, feasibility and expandability are high.

Moreover, since the paradigm of the determinate mapping between a requirement entity and a workflow entity is suitable for establishing mappings between any requirement entities and workflow entities, the technical solution is versatile.

Brief description of the drawings

To better understand the present application, embodiments of the present application are described in detail below with reference to the drawings, in order to give those skilled in the art a clearer understanding of the above and other features and advantages of the present application. In the drawings:

Fig. 1 is an exemplary flow chart of a workflow recommendation method in embodiments of the present application.

Figs. 2A and 2B each show a schematic diagram of a basic mapping between a requirement entity and a workflow entity in an example of the present application.

Fig. 3A is a schematic diagram of determinate mappings from use cases to edge applications, based on the basic mapping shown in Fig. 2A, in an example of the present application.

Fig. 3B is a schematic diagram showing the search for an edge application of a current use case, based on the determinate mappings shown in Fig. 3A.

Fig. 3C is a schematic diagram showing the search for an edge application of a current task of a current use case, based on the determinate mappings shown in Fig. 3A.

Fig. 4A is a schematic diagram of determinate mappings from use cases to functional blocks, based on the basic mapping shown in Fig. 2B, in an example of the present application.

Fig. 4B is a schematic diagram showing the search for a functional block of a current task of a current use case, based on the determinate mappings shown in Fig. 4A.

Fig. 5 is an exemplary structural diagram of a workflow recommendation device in embodiments of the present application.

Fig. 6 is an exemplary structural diagram of another workflow recommendation device in embodiments of the present application.

Key to the drawings:

| Label | Meaning |
| --- | --- |
| 101 - 104 | Steps |
| EA1, EA2, EA3, EAN1 | Edge applications |
| SK1, SK2, SKN2 | Skills |
| UC1, UC2, UC3, UCN3, UCN8 | Use cases |
| T1, T2, TN4, TN7 | Tasks |
| FB1, FB2, FB3, FBN5 | Functional blocks |
| DV1, DV2, DVN6 | Devices |

(continued)

| Label | Meaning |
|---|---|
| 51 | Human-machine interaction module |
| 52 | Workflow entity search module |
| 61 | Memory |
| 62 | Processor |
| 63 | Bus |

Embodiments of the present application

In embodiments of the present application, in order to avoid various problems associated with keyword mapping, we consider establishing a determinate mapping between a requirement entity and a workflow entity, and recommending a corresponding workflow entity for a current requirement entity on the basis of the determinate mapping.

To clarify the objectives, technical solutions and advantages of the present application, the technical solutions of the present application are described in detail below through embodiments with reference to the drawings.

Fig. 1 is an exemplary flow chart of a workflow recommendation method in embodiments of the present application. As shown in Fig. 1, the method may comprise the following steps:

Step 101: establishing determinate mappings between requirement entities and workflow entities in advance. In the determinate mapping, a connection is established between a requirement entity and a corresponding workflow entity by a "using" and "used" mapping.

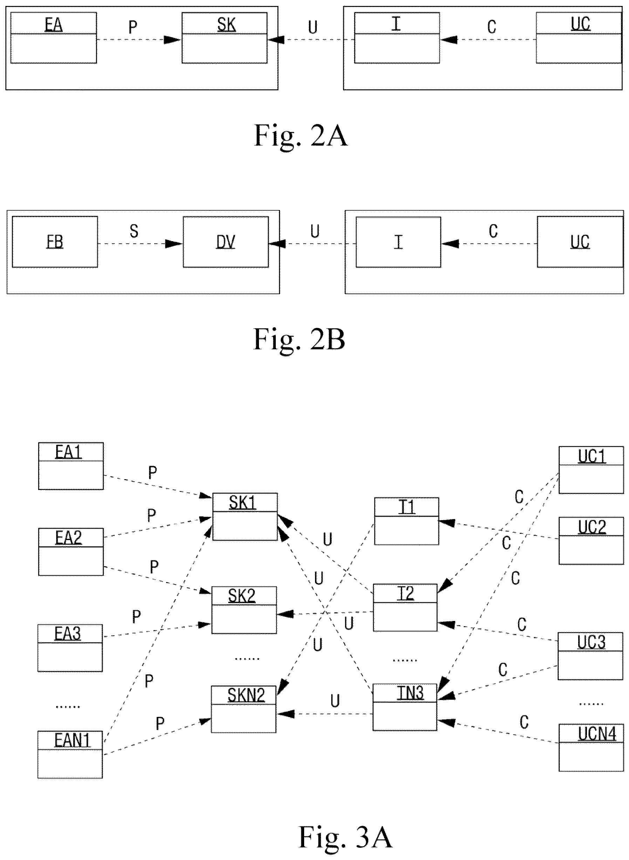

For example, Figs. 2A and 2B each show a schematic diagram of a basic mapping between a requirement entity and a workflow entity in an example of the present application.

Fig. 2A takes as an example the case where the requirement entity comprises a use case UC and a task T and the workflow entity comprises an edge application EA and a skill SK. As shown in Fig. 2A, in the basic mapping shown in Fig. 2A, a "comprising" and "comprised" mapping is provided between the use case UC representing the requirement entity and the task T comprised in the use case UC, a "providing" and "provided" mapping is provided between the edge application EA representing the workflow entity and the skill SK provided by the edge application EA, and a "using" and "used" mapping is provided between the task T and the skill SK. In Fig. 2A, P means "provide", C means "comprise", and U means "use". Here, the "comprising" and "comprised" mapping, the "providing" and "provided" mapping, and the "using" and "used" mapping are all determinate mappings.

Fig. 2B takes as an example the case where the requirement entity comprises a use case UC and a task T and the workflow entity comprises a functional block FB and a device DV. As shown in Fig. 2B, in the basic mapping shown in Fig. 2B, a "comprising" and "comprised" mapping is provided between the use case UC representing the requirement entity and the task T comprised in the use case UC, a "supporting" and "supported" mapping is provided between the functional block FB representing the workflow entity and the device DV supported by the functional block FB, and a "using" and "used" mapping is provided between the task T and the device DV. In Fig. 2B, S means "support", C means "comprise", and U means "use". Here, the "comprising" and "comprised" mapping, the "supporting" and "supported" mapping, and the "using" and "used" mapping are all determinate mappings.

Fig. 3A shows a schematic diagram of determinate mappings from use cases to edge applications, based on the basic mapping shown in Fig. 2A, in an example. As shown in Fig. 3A, at a workflow entity side, a first edge application EA1 provides a first skill SK1; a second edge application EA2 provides the first skill SK1 and a second skill SK2; a third edge application EA3 provides the second skill SK2; ......; and an Nlst edge application EAN1 provides the first skill SK1 and an N2nd skill SKN2. At a requirement entity side, a first use case UC1 comprises a second task T2 and an Nth task TN; a second use case UC2 comprises a first task T1; a third use case UC2 comprises the second task T2 and an N3rd task TN3; ......; and an N4th use case UCN4 comprises the N3rd task TN3. Between the workflow entity and the requirement entity, the first task T1 uses the N2nd skill SKN2; the second task T2 uses the first skill SK1 and the second skill SK2; and the N3rd task TN3 uses the first skill SK1. In Fig. 3A, P means "provide", C means "comprise", and U means "use". As can be seen, by means of such determinate mappings, it is possible to connect different edge applications having various skills and different use cases having various tasks.

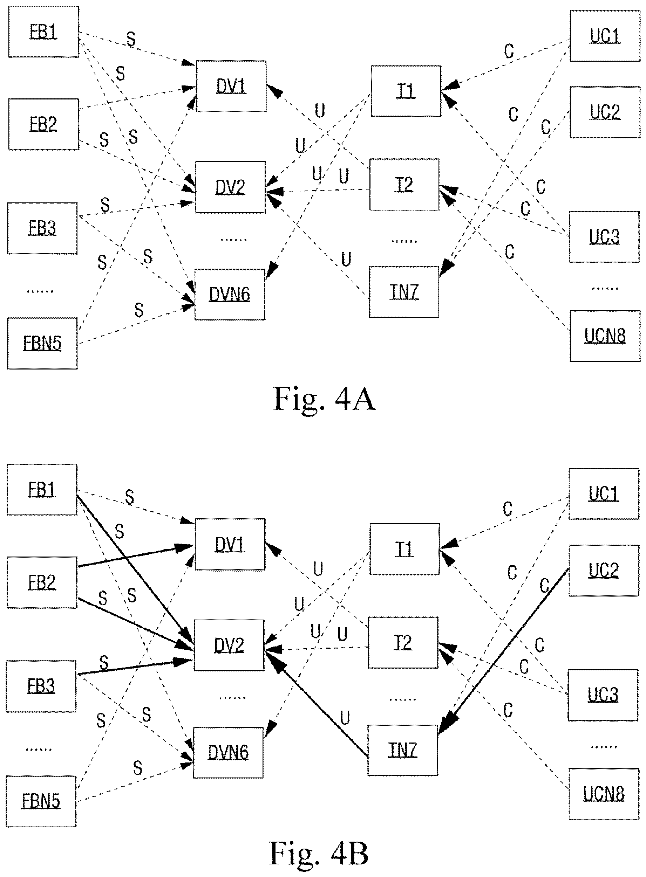

Fig. 4A shows a schematic diagram of determinate mappings from use cases to functional blocks, based on the basic mapping shown in Fig. 2B, in an example. As shown in Fig. 4A, at a workflow entity side, a first functional block FB1 supports a first device DV1, a second device DV2 and an N6th device DVN6; a second functional block FB2 supports the first device DV1 and the second device DV2; a third functional block FB3 supports the second device DV2 and an N6th device DVN6; ......; and an N5th functional block FBN5 supports the first device DV1 and the N6th device DVN6. At a requirement entity side, a first use case UC1 comprises a first task T1 and an N7th task TN7; a second use case UC2 comprises an N7th task TN7; a third use case UC2 comprises the first task T1 and a second task T2; ......; and an N8th use case UCN8 comprises the second task T2. Between the workflow entity and the requirement entity, the first task T1 uses the second device DV2 and the N6th device DVN6; the second task T2 uses the first device DV1 and the second device DV2; and the N7th task TN7 uses the second device DV1. In Fig. 4A, S means "support", C means "comprise", and U means "use". As can be seen, by means of such determinate mappings, it is possible to connect different functional blocks supporting various devices and different use cases having various tasks.

In a particular implementation, the determinate mappings between the requirement entities and the workflow entities may be created by a workflow provider according to various application requirements and requirement entities provided by a requirement provider and various workflow entities provided by the workflow provider, or may be created by a requirement provider according to various workflow entities provided by a workflow provider and various application requirements and requirement entities of the requirement provider, or may be created by a third party according to various application entities provided by a requirement provider and various workflow entities provided by a workflow provider. No restrictions are imposed in this respect here.

Step 102: receiving a current requirement entity.

In this embodiment, the current requirement entity may be provided by any user, who may for example be a requirement provider in an actual application, or another user of a test system, etc.

Taking as an example the basic mappings shown in Figs. 2A and 2B, a current use case representing the current requirement entity, or a current task of the current use case, may be received in this step. For example, in the case of the determinate mapping shown in Fig. 3A, the current requirement entity may be the third use case UC3 (i.e. the current use case), or may be the first task T1 of the second use case UC2 (i.e. the current task of the current use case), etc. As another example, in the case of the determinate mapping shown in Fig. 4A, the current requirement entity may be the second use case UC2 (i.e. the current use case), or may be the N7th task TN7 of the second use case UC2 (i.e. the current task of the current use case).

Step 103: based on the determinate mappings between the requirement entities and the workflow entities, using the current requirement entity as a keyword to search the determinate mappings, in order to obtain a candidate workflow entity, where a determinate mapping has been established between this candidate workflow entity and the current requirement entity. Generally, at least one candidate workflow entity may be obtained.

Taking as an example the determinate mappings shown in Figs. 2A and 3A, in this step the current use case or the current task of the current use case may be used as a keyword to search the determinate mappings, in order to obtain a candidate edge application providing the skill used by the current use case or the current task of the current use case.

The specific query process may be as follows:

Find [Edge Apps], Condition with { ; search for [edge applications] which meet the following conditions:

1. [Edge Apps] provide [Skills]&& ; [edge applications] provide [skills], and
2. [Skills] are used by [Tasks]&& ; [skills] are used by [tasks], and
3. [Tasks] are contained in [Use Cases] ; [tasks] are contained in [use cases]. }

In the case where the current requirement entity is the third use case UC3, the following query process may be used:

Find [Edge Apps], Condition with { ; search for [edge applications] which meet the following conditions:

1. [Edge Apps] provide [Skills]&& ; [edge applications] provide [skills], and
2. [Skills] are used by [Tasks]&& ; [skills] are used by [tasks], and
3. [Tasks] are contained in <UC3> ; [tasks] are contained in [third use case]. }

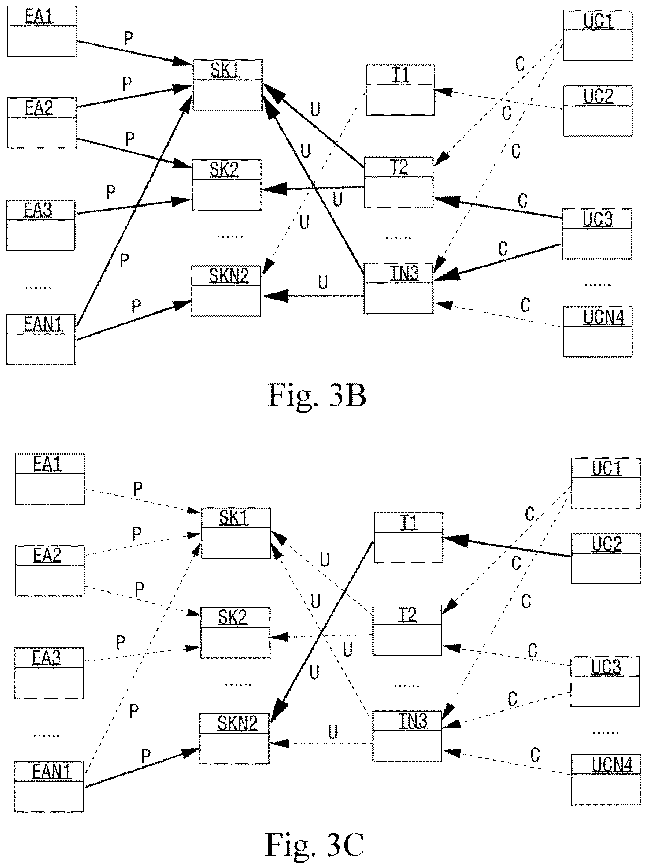

Correspondingly, as indicated by the solid line parts in Fig. 3B, the first edge application EA1, the second edge application EA2, the third edge application EA3 and the Nlst edge application EAN1 will be obtained.

In the case where the current requirement entity is the first task T1 of the second use case UC2, the following query process may be used:

Find [Edge Apps], Condition with { ; search for [edge applications] which meet the following conditions:

1. [Edge Apps] provide [Skills]&& ; [edge applications] provide [skills], and
2. [Skills] are used by [T1]&& ; [skills] are used by [first task], and
3. [T1] are contained in <UC2> ; [first task] is contained in [second use case]. }

Correspondingly, as indicated by the solid line parts in Fig. 3C, the Nlst edge application EAN1 will be obtained.

Taking as an example the determinate mappings shown in Figs. 2B and 4A, in this step the current use case or the current task of the current use case may be used as a keyword to search the determinate mappings, in order to obtain a candidate functional block supporting the device used by the current use case or the current task of the current use case.

The specific query process may be as follows:

Find [Function Blocks], Condition with { ; search for [functional blocks] which meet the following conditions:

1. [Function Blocks] support [Devices]&& ; [functional blocks] support [devices], and
2. [Devices] are used by [Tasks]&& ; [devices] are used by [tasks], and
3. [Tasks] are contained in [Use Cases] ; [tasks] are contained in [use cases]. }

In the case where the current requirement entity is the second use case UC2, the following query process may be used:

Find [Function Blocks], Condition with { ; search for [functional blocks] which meet the following conditions:

1. [Function Blocks] support [Devices]&& ; [functional blocks] support [devices], and
2. [Devices] are used by [Tasks]&& ; [devices] are used by [tasks], and
3. [Tasks] are contained in <UC2> ; [tasks] are contained in [second use case]. }

Correspondingly, as indicated by the solid line parts in Fig. 4B, the first functional block FB1, the second functional block FB2 and the third functional block FB3 will be obtained.

In the case where the current requirement entity is the N7th task TN7 of the second use case UC2, the following query process may be used:

Find [Function Blocks], Condition with { ; search for [functional blocks] which meet the following conditions:

1. [Function Blocks] support [Devices]&& ; [functional blocks] support [devices], and
2. [Devices] are used by [TN7]&& ; [devices] are used by [N7th task], and
3. [TN7] are contained in <UC2> ; [N7th task] is contained in [second use case]. }

Correspondingly, since the second use case contains only one task, i.e. the N7th task TN7, when using the second use case or the N7th task of the second use case as a keyword to search the determinate mappings shown in Fig. 4A, the same search result will be obtained, i.e., as indicated by the solid line parts in Fig. 4B, the first functional block FB1, the second functional block FB2 and the third functional block FB3 will be obtained.

Step 104: recommending the candidate workflow entity.

In the case of the determinate mappings shown in Figs. 2A and 3A, in this embodiment the candidate edge application may be recommended as a workflow corresponding to the current requirement entity.

In the case of the determinate mappings shown in Figs. 2B and 4A, in this embodiment the candidate functional block may be recommended as a workflow corresponding to the current requirement entity.

In this embodiment, in order to enable persistent mapping expansion and updating of the determinate relationships to be maintained, if it is determined, after using a current requirement entity as a keyword to search the determinate mappings, that the current requirement entity is not in the determinate mappings, then the current requirement entity may be provided to a determinate mapping builder, and the determinate mapping builder then maps the current requirement entity to an existing workflow entity or a new workflow entity, forms a new mapping record and updates the determinate mappings with the new mapping record. For example, in the case of the determinate mappings shown in Figs. 2A and 3A, if it is determined, after using the current use case or the current task of the current use case as a keyword to search the determinate mappings, that the current use case or the current task of the current use case is not in the determinate mappings, then the current use case or the current task of the current use case is provided to a determinate mapping builder, and the determinate mapping builder then maps the current use case or the current task of the current use case to a new skill or an existing skill of an existing edge application or to a skill provided by a new edge application, forms a new mapping record and updates the determinate mappings with the new mapping record. As another example, in the case of the determinate mappings shown in Figs. 2B and 4A, if it is determined, after using the current use case or the current task of the current use case as a keyword to search the determinate mappings, that the current use case or the current task of the current use case is not in the determinate mappings, then the current use case or the current task of the current use case is provided to a determinate mapping builder, and the determinate mapping builder then maps the current use case or the current task of the current use case to a new device or an existing device supported by an existing functional block or to a device supported by a new functional block, forms a new mapping record and updates the determinate mappings with the new mapping record.

Of course, a requirement provider could also persistently propose new requirement entities, in which case a determinate mapping builder maps the new requirement entities to an existing workflow entity or a new workflow entity, forms a new mapping record and updates the determinate mappings with the new mapping record.

In addition, to give the determinate relationships learning ability and maintain persistent mapping rank updating, in an embodiment of the present invention, a selection result of selection by a user from among the candidate workflow entities may be received, and a weighting of a mapping between the candidate workflow entity selected by the user and the current requirement entity may be increased according to the selection result. Further, a weighting of a mapping between a candidate workflow entity not selected by the user and the current requirement entity may be decreased according to the selection result.

Specifically, in the case of the determinate mappings shown in Figs. 2A and 3A, a selection result of selection by a user from among the candidate edge applications may be received; and a weighting of a mapping between the candidate edge application selected by the user and the current requirement entity may be increased according to the selection result. Further, a weighting of a mapping between a candidate edge application not selected by the user and the current requirement entity may be decreased according to the selection result. In the case of the determinate mappings shown in Figs. 2B and 4A, a selection result of selection by a user from among the candidate functional blocks may be received; and a weighting of a mapping between the candidate functional block selected by the user and the current requirement entity may be increased according to the selection result. Further, a weighting of a mapping between a candidate functional block not selected by the user and the current requirement entity may be decreased according to the selection result.

For example, an initial weighting, e.g. 100%, may be set for each newly established determinate mapping between requirement entities and workflow entities. When a user receives a recommended candidate workflow entity, the user may select or deselect one or more recommended workflow entities. If a workflow entity is selected, then a reward may be fed back to a mapping between the selected workflow entity and the inputted requirement entity. A simple reward equation is shown in formula (1) below:

$$R_{updated} = R_{current} + Award^{n}\% \leq 100\% \qquad (1)$$

The 100% on the right-hand side in formula (1) is used to define the maximum value of the weighting as 100%.

Further, if a workflow entity is not selected, then a penalty may be fed back to a mapping between the selected workflow entity and the inputted requirement entity. A simple penalty equation is shown in formula (2) below:

$$R_{updated} = R_{current} - Award^{m}\% > 0\% \qquad (2)$$

The 0% on the right-hand side in formula (2) is used to define the minimum value of the weighting as 0%.

$R_{current}$ is the current weighting, $R_{updated}$ is the updated weighting, Award is a reward/penalty coefficient greater than 1, n is the number of times the user makes a selection, and m is the number of times the user does not make a selection.

A workflow recommendation method in embodiments of the present invention has been described in detail above; a workflow recommendation device in embodiments of the present invention will be described in detail below. The workflow recommendation device in embodiments of the present invention may be used to implement the workflow recommendation method in embodiments of the present invention; for details not disclosed in the device embodiments of the present invention, the corresponding descriptions in the method embodiments of the present invention may be referred to.

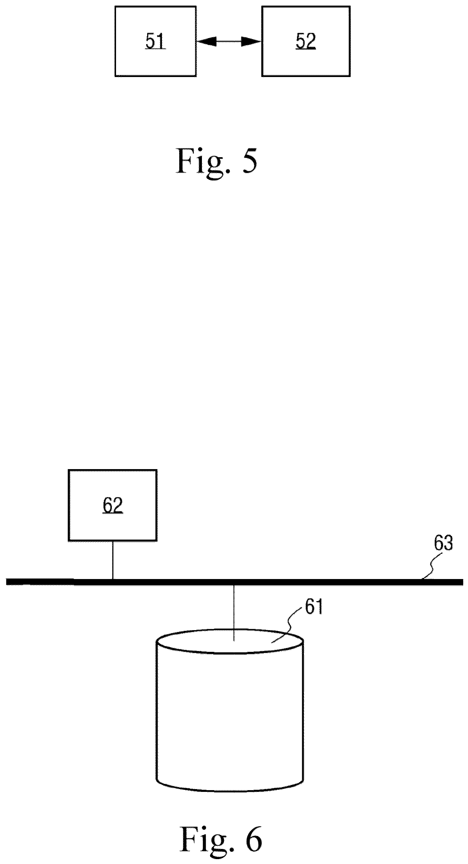

Fig. 5 is an exemplary structural diagram of a workflow recommendation device in embodiments of the present invention. As shown in Fig. 5, the device may comprise: a human-machine interaction module 51 and a workflow entity search module 52.

The human-machine interaction module is used to receive a current requirement entity, to provide the current requirement entity to the workflow entity search module 52 and to recommend a candidate workflow entity from the workflow search module 52. The workflow entity search module 52 is used, based on a pre-established determinate mapping between each requirement entity and each workflow entity, in order to search the determinate mappings using the current requirement entity as a keyword, in order to obtain at least one candidate workflow entity, where a determinate mapping has been established between this at least one candidate workflow entity and the current requirement entity, and to provide the at least one candidate workflow entity to the human-machine interaction module 51. In the determinate mapping, a connection is established between the requirement entity and the corresponding workflow entity by a "using" and "used" mapping.

In the determinate mappings shown in Figs. 2A and 3A, a "comprising" and "comprised" mapping is provided between a use case representing a requirement entity and a task comprised in the use case, a "providing" and "provided" mapping is provided between an edge application representing a workflow entity and a skill provided by the edge application, and a "using" and "used" mapping is provided between the task and the skill.

In the determinate mappings shown in Figs. 2B and 4A, a "comprising" and "comprised" mapping is provided between a use case representing a requirement entity and a task comprised in the use case, a "supporting" and "supported" mapping is provided between a functional block representing a workflow entity and a device supported by the functional block, and a "using" and "used" mapping is provided between the task and the device.

In an embodiment, upon receiving a search failure indication from the workflow entity search module 52 (including not receiving a candidate edge application from the workflow entity search module 52 within a set time), the human-machine interaction module 51 may provide the current requirement entity to a determinate mapping builder, and the determinate mapping builder then maps the current requirement entity to an existing workflow entity or a new workflow entity, forms a new mapping record and provides the new mapping record to the workflow entity search module 52, and the workflow entity search module 52 updates the determinate mappings with the new mapping record.

In an embodiment, the human-machine interaction module 51 further receives a selection result of selection by a user from the candidate workflow entity and provides the selection result to the workflow entity search module 52; the workflow entity search module 52 is further used for increasing a weighting of a mapping between the candidate workflow entity selected by the user and the current requirement entity according to the selection result. Further, the workflow entity search module 52 may also decrease a weighting of a mapping between a candidate workflow entity not selected by the user and the current requirement entity according to the selection result.

In fact, the workflow recommendation device provided in such embodiments of the present application may be specifically implemented in various ways. For example, an application programming interface conforming to specific rules may be used to compile the workflow recommendation device as a plugin installed in a smart terminal, or the workflow recommendation device may be packaged in an application program for a user to download and use.

When complied as a plugin, the workflow recommendation device may be realized in various plugin forms, such as ocx, dll and cab. The workflow recommendation device provided in such embodiments of the present application may also be realized using specific technologies, such as Flash plugin technology, RealPlayer plugin technology, MMS plugin technology, MIDI people plugin technology or ActiveX plugin technology.

The workflow recommendation method provided in such embodiments of the present application may be stored in various storage media by instruction storage or instruction set storage. These storage media include but are not limited to: floppy disks, optical disks, DVDs, hard disks, flash memories, USB flash memories, CF cards, SD cards, MMC cards, SM cards, memory sticks and xD cards.

In addition, the workflow recommendation method provided in such embodiments of the present application may also be applied to storage media based on flash memory (Nand-flash), such as USB flash memory drives, CF cards, SD cards, SDHC cards, MMC cards, SM cards, memory sticks and xD cards.

It should be clear that an operating system operating in a computer can realize some or all actual operations not only by executing program code read from a storage medium by the computer, but also by using instructions based on program code in order to realize the functions of any one of the embodiments above.

For example, Fig. 6 is an exemplary structural diagram of another workflow recommendation device in embodiments of the present application. The device may be used to perform the method shown in Fig. 1, or to realize the device in Fig. 5. As shown in Fig. 6, the device may comprise at least one memory 61 and at least one processor 62. In addition, it may also comprise other components, such as a communication port, an input/output controller, a network communication interface, etc. These components communicate via a bus 63, etc.

The at least one memory 61 is used to store a computer program. In an example, the computer program may be understood to comprise the modules of the device shown in Fig. 5. In addition, the at least one memory 61 may store an operating system, etc. Operating systems include but are not limited to: Android operating systems, Symbian operating systems, Windows operating systems, Linux operating systems, etc.

The at least one processor 62 is used to retrieve the computer program stored in the at least one memory 61, so as to perform the workflow recommendation method described in examples of the present application. The processor 62 may be a CPU, a processing unit/module, an ASIC, a logic module or a programmable gate array, etc. and may receive and send data via a communication port.

The input/output controller has a display and an input device, for inputting, outputting and displaying relevant data as a human-machine interaction module.

It should be understood that, as used herein, "and/or" is intended to include any and all possible combinations of one or more of the associated items listed.

The number of embodiments of the present application is merely intended for description purposes and does not represent advantages of embodiments.

The above are merely preferred embodiments of the present application, which are not intended to limit it; any modifications, equivalent substitutions or improvements, etc. made within the spirit and principles of the present application shall be included in the scope of protection of the present application.

Claims

1. A workflow recommendation method, **characterized by** comprising:

   receiving a current requirement entity (102);
   based on a pre-established determinate mapping between each requirement entity and each workflow entity, using the current requirement entity as a keyword to search the determinate mappings, in order to obtain at least one candidate workflow entity, where a determinate mapping has been established between this at least one candidate workflow entity and the current requirement entity (103); in the determinate mapping, a connection is established between the requirement entity and the corresponding workflow entity by a "using" and "used" mapping;
   recommending the candidate workflow entity (104).

2. The workflow recommendation method as claimed in claim 1, **characterized in that** each said requirement entity comprises a use case and a task, each said workflow entity comprises an edge application and a skill, and the current requirement entity comprises a current use case or a current task of a current use case;

   in the determinate mapping, a "comprising" and "comprised" mapping is provided between a use case representing a requirement entity and a task comprised in the use case, a "providing" and "provided" mapping is provided between an edge application representing a workflow entity and a skill provided by the edge application, and a "using" and "used" mapping is provided between the task and the skill;
   the step of using the current requirement entity as a keyword to search the determinate mappings, in order to obtain a workflow entity, where a determinate mapping has been established between this workflow entity and the current requirement entity, comprises: using the current use case or the current task of the current use case as a keyword to search the determinate mappings, in order to obtain at least one candidate edge application providing a skill used by the current use case or the current task of the current use case.

3. The workflow recommendation method as claimed in claim 2, **characterized in that** the step of using the current use case as a keyword to search the determinate mappings comprises:
   searching for [edge applications] which meet the following conditions:

   [edge applications] provide [skills], and
   [skills] are used by [tasks], and
   [tasks] are included in [current use case];
   the step of using the current task of the current use case as a keyword to search the determinate mappings comprises:
   searching for [edge applications] which meet the following conditions:

   [edge applications] provide [skills], and
   [skills] are used by [current task], and
   [current task] is included in [current use case].

4. The workflow recommendation method as claimed in claim 1, **characterized in that** each said requirement entity comprises a use case and a task, each said workflow entity comprises a functional block and a device, and the current requirement entity comprises a current use case or a current task of a current use case;

   in the determinate mapping, a "comprising" and "comprised" mapping is provided between a use case representing a requirement entity and a task comprised in the use case, a "supporting" and "supported" mapping is provided between a functional block representing a workflow entity and a device supported by the functional block, and a "using" and "used" mapping is provided between the task and the device;
   the step of using the current requirement entity as a keyword to search the determinate mappings, in order to obtain a workflow entity, where a determinate mapping has been established between this workflow entity and the current requirement entity, comprises: using the current use case or the current task of the current use case as a keyword to search the determinate mappings, in order to obtain at least one candidate functional block supporting a device used by the current use case or the current task of the current use case.

5. The workflow recommendation method as claimed in claim 4, **characterized in that** the step of using the current use case as a keyword to search the determinate mappings comprises:

searching for[functional blocks] which meet the following conditions:

[functional blocks] support [devices], and
[devices] are used by [tasks], and
[tasks] are included in [current use case];
the step of using the current task of the current use case as a keyword to search the determinate mappings comprises:
searching for [functional blocks] which meet the following conditions:

[functional blocks] support [devices], and
[devices] are used by [current task], and
[current task] is included in [current use case].

6. The workflow recommendation method as claimed in any one of claims 1 - 5, **characterized by** further comprising: upon determining, after using the current requirement entity as a keyword to search the determinate mappings, that the current requirement entity is not in the determinate mappings, providing the current requirement entity to a determinate mapping builder, and the determinate mapping builder mapping the current requirement entity to an existing workflow entity or a new workflow entity, forming a new mapping record and updating the determinate mappings with the new mapping record.

7. The workflow recommendation method as claimed in any one of claims 1 - 5, **characterized by** further comprising: receiving a selection result of selection by a user from the candidate workflow entity; increasing a weighting of a mapping between a candidate workflow entity selected by the user and the current requirement entity according to the selection result.

8. The workflow recommendation method as claimed in claim 7, **characterized by** further comprising: decreasing a weighting of a mapping between a candidate workflow entity not selected by the user and the current requirement entity according to the selection result.

9. A workflow recommendation device, **characterized by** comprising: a human-machine interaction module (51) and a workflow entity search module (52), wherein

the human-machine interaction module (51) is used to receive a current requirement entity, to provide the current requirement entity to the workflow entity search module (52) and to recommend a candidate workflow entity from the workflow search module (52); the workflow entity search module (52) is used, based on a pre-established determinate mapping between each requirement entity and each workflow entity, to search the determinate mappings using the current requirement entity as a keyword, in order to obtain at least one candidate workflow entity, where a determinate mapping has been established between this at least one candidate workflow entity and the current requirement entity, and to provide the at least one candidate workflow entity to the human-machine interaction module (51); in the determinate mapping, a connection is established between the requirement entity and the corresponding workflow entity by a "using" and "used" mapping.

10. The workflow recommendation device as claimed in claim 9, **characterized in that** each said requirement entity comprises a use case and a task, each said workflow entity comprises an edge application and a skill, and the current requirement entity comprises a current use case or a current task of a current use case;

in the determinate mapping, a "comprising" and "comprised" mapping is provided between a use case representing a requirement entity and a task comprised in the use case, a "providing" and "provided" mapping is provided between an edge application representing a workflow entity and a skill provided by the edge application, and a "using" and "used" mapping is provided between the task and the skill; the workflow entity search module (52) uses the current use case or the current task of the current use case as a keyword to search the determinate mappings, in order to obtain at least one candidate edge application providing a skill used by the current use case or the current task of the current use case.

11. The workflow recommendation device as claimed in claim 9, **characterized in that** each said requirement entity comprises a use case and a task, each said workflow entity comprises a functional block and a device, and the current requirement entity comprises a current use case or a current task of a current use case;

in the determinate mapping, a "comprising" and "comprised" mapping is provided between a use case representing a requirement entity and a task comprised in the use case, a "supporting" and "supported" mapping is provided between a functional block representing a workflow entity and a device supported by the functional block, and a "using" and "used" mapping is provided between the task and the device;

the workflow entity search module (52) uses the current use case or the current task of the current use case as a keyword to search the determinate mappings, in order to obtain at least one candidate functional block supporting a device used by the current use case or the current task of the current use case.

12. The workflow recommendation device as claimed in any one of claims 9 - 11, **characterized in that** upon receiving a search failure indication from the workflow entity search module, the human-machine interaction module (51) provides the current requirement entity to a determinate mapping builder, and the determinate mapping builder then maps the current requirement entity to an existing workflow entity or a new workflow entity, forms a new mapping record and provides the new mapping record to the workflow entity search module (52), so that the workflow entity search module (52) updates the determinate mappings with the new mapping record.

13. The workflow recommendation device as claimed in any one of claims 9 - 11, **characterized in that** the human-machine interaction module (51) further receives a selection result of selection by a user from the candidate workflow entity and provides the selection result to the workflow entity search module;

the workflow entity search module (52) further increases a weighting of a mapping between a candidate workflow entity selected by the user and the current requirement entity, and decreases a weighting of a mapping between a candidate workflow entity not selected by the user and the current requirement entity, according to the selection result.

14. A workflow recommendation device, **characterized by** comprising at least one memory (61) and at least one processor (62), wherein:

the at least one memory (61) is used to store a computer program;

the at least one processor (62) is used to retrieve the computer program stored in the at least one memory (61) and to perform the workflow recommendation method as claimed in any one of claims 1 - 8.

15. A computer-readable storage medium, having a computer program stored thereon, **characterized in that** the computer program is executable by a processor and performs the workflow recommendation method as claimed in any one of claims 1 - 8.

EP 4 502 890 A1

Fig. 1

12

Fig. 2A

Fig. 2B

Fig. 3A

Fig. 3B

Fig. 3C

Fig. 4A

Fig. 4B

Fig. 5

Fig. 6

## INTERNATIONAL SEARCH REPORT

| International application No. |
|---|
| **PCT/CN2022/090642** |

### A. CLASSIFICATION OF SUBJECT MATTER

G06Q 10/06(2012.01)i; G06F 16/9535(2019.01)i

According to International Patent Classification (IPC) or to both national classification and IPC

### B. FIELDS SEARCHED

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

EPODOC, WPI, CNPAT, CNKI, IEEE: 工作流, 需求, 任务, 实体, 映射, 关键词, 关键字, 查询, 搜索, 候选, 备选, 应用, 提供, 使用, 推荐, workflow, requirement, task, entity, map, keyword, query, search, candidate, alternative, application, provide, use, recommend

### C. DOCUMENTS CONSIDERED TO BE RELEVANT

| Category* | Citation of document, with indication, where appropriate, of the relevant passages | Relevant to claim No. |
|---|---|---|
| Y | CN 112785194 A (CHINA UNIVERSITY OF GEOSCIENCES, BEIJING) 11 May 2021 (2021-05-11) abstract, and description, paragraphs 55-123 and 144-146 | 1-15 |
| Y | CN 110806977 A (TAIKANG INSURANCE GROUP CO., LTD. et al.) 18 February 2020 (2020-02-18) abstract, description, paragraphs 32-71, and figures 1 and 6-8 | 1-15 |
| A | CN 101847228 A (TSINGHUA UNIVERSITY) 29 September 2010 (2010-09-29) entire document | 1-15 |
| A | CN 112100359 A (BEIJING DIDI INFINITY TECHNOLOGY AND DEVELOPMENT CO., LTD.) 18 December 2020 (2020-12-18) entire document | 1-15 |
| A | CN 113302639 A (SHENZHEN HUANTAI TECHNOLOGY CO., LTD. et al.) 24 August 2021 (2021-08-24) entire document | 1-15 |
| A | US 2014101126 A1 (DOAT MEDIA LTD.) 10 April 2014 (2014-04-10) entire document | 1-15 |

☐ Further documents are listed in the continuation of Box C.   ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090642**

| Patent document cited in search report | | | Publication date (day/month/year) | Patent family member(s) | | | Publication date (day/month/year) |
|---|---|---|---|---|---|---|---|
| CN | 112785194 | A | 11 May 2021 | None | | | |
| CN | 110806977 | A | 18 February 2020 | None | | | |
| CN | 101847228 | A | 29 September 2010 | None | | | |
| CN | 112100359 | A | 18 December 2020 | None | | | |
| CN | 113302639 | A | 24 August 2021 | None | | | |
| US | 2014101126 | A1 | 10 April 2014 | US | 2017091338 | A1 | 30 March 2017 |

Form PCT/ISA/210 (patent family annex) (January 2015)